# EUROPEAN PATENT APPLICATION

(11) **EP 1 538 388 A1**
(43) Date of publication of application: **08.06.2005**
(21) Application number: 04257396.4
(22) Date of filing: 30.11.2004
(51) Int. Cl.: F16N 7/22, F01M 9/06

(54) **Lubricant circulation system and method**

(30) Priority: 03.12.2003 US 726880
(71) Applicant: Dresser-Rand Company, Olean New York 14760 (US)
(72) Inventor: Streeter, Robert T., Canisteo New York 14328-9726 (US); Vossler, Michael P., Wellsville New York 14895 (US)
(74) Representative: Holmes, Matthew Peter

(57) **Abstract**

A lubricant circulation system and method are provided for circulating lubricant used to lubricate the interface between a rotating member and a stationary member. Lubricant is drawn from a lubricant source and delivered to the stationary member. The system and method utilize the pressure generated by rotation of the rotating member in the stationary member to drive the lubricant through the stationary member and back to the lubricant source.

## Description

### Background

This invention relates to a system and method for circulating and/or cooling lubricant associated with a rotating member and a stationary member.

Conventional lubricating arrangements associated with rotary machines often utilize lubricant that has not been properly circulated, thus resulting in a diminished useful life of the rotary machine due to improper lubrication. It is therefore desirable to provide circulated lubricant to the rotary machine such that the lubricant provides greater protection against the general wear and tear that occurs within the rotary machine. However, due to the increased cost and space constraints associated with providing pumps to circulate lubricant in a rotary machine, it is difficult to provide circulated lubricant to the rotary machine in an economical and efficient manner.

### Brief Description of the Drawings

Fig. 1 is a sectional view of a bearing assembly incorporating a lubricant circulation system according to the present invention.

Fig. 2 is a sectional view of the bearing assembly of Fig. 1 taken along the line 2-2.

Fig. 3 is a sectional view of a journal bearing and a shaft of the bearing assembly of Fig. 1 depicting a slot and a port formed in the journal bearing.

Fig. 4 is a perspective view of the bearing assembly of Fig. 1 shown positioned over a sump, which is shown schematically, with portions of the bearing assembly being removed to depict a lubricant circulation path.

Fig. 5 is a schematic view of a bearing assembly incorporating a lubricant circulation system according to an alternative embodiment of the invention.

Fig. 6 is a schematic view of a pair of bearing assemblies incorporating a lubricant circulation system according to yet another alternative embodiment of the invention.

### Detailed Description

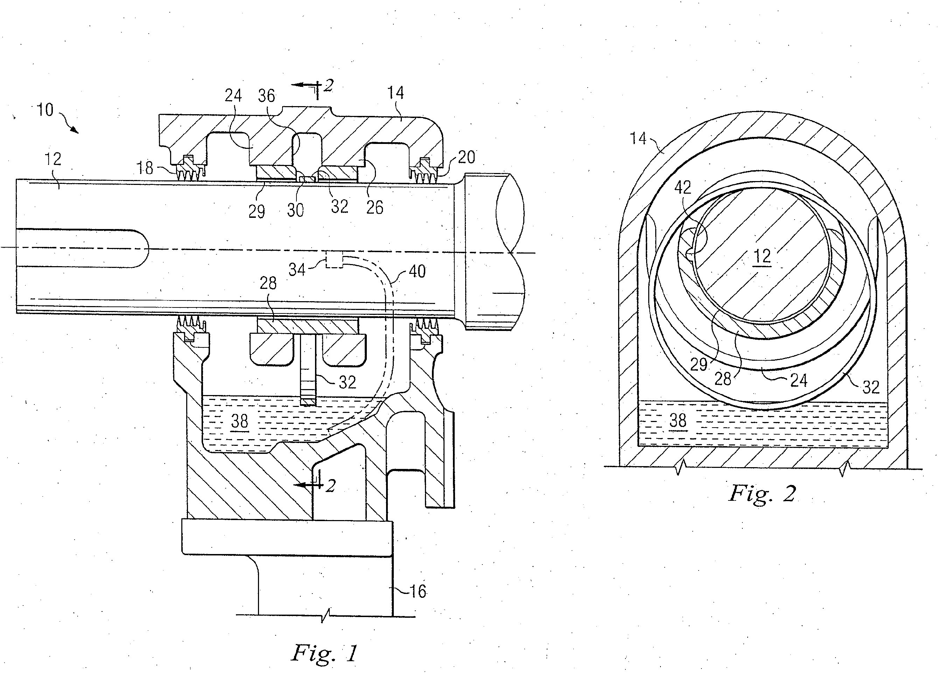

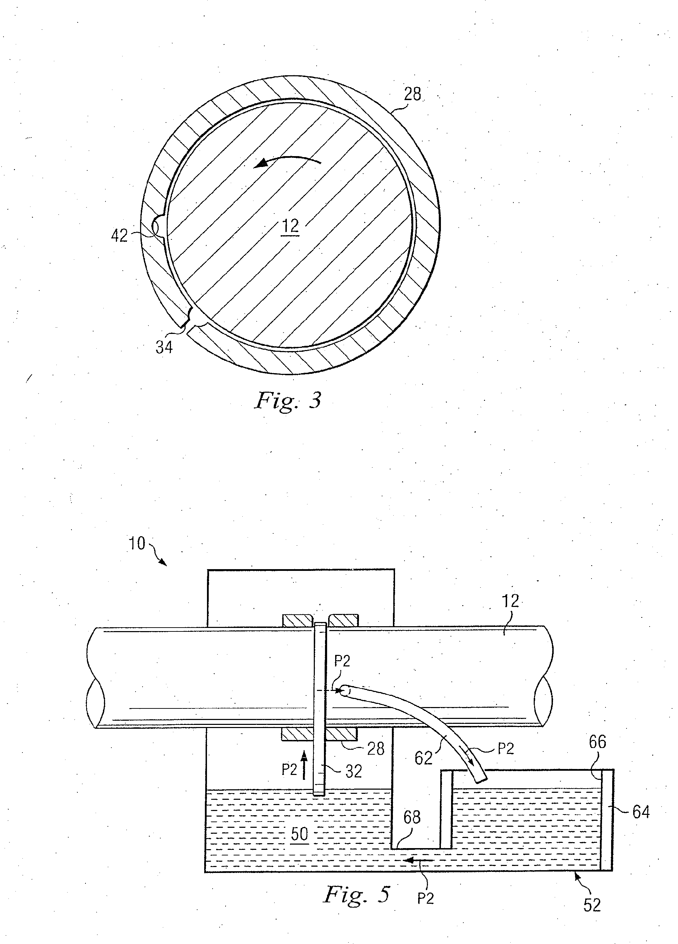

Referring to Figs. 1-4, a bearing assembly incorporating a lubricant circulation system is generally referred to by the reference numeral 10. For purposes of example, the bearing assembly 10 is used as an exhaust end bearing assembly for supporting a turbine shaft 12.

The bearing assembly 10 includes a bearing case 14, which is supported in any conventional manner by a bearing support 16. A pair of fixed annular labyrinth seals 18, 20 are disposed between the bearing case 14 and the shaft 12 to prevent leakage of lubricant in both axial directions of the shaft beyond the bearing case. The labyrinth seals 18, 20 are affixed to the bearing case 14 in any conventional manner such as via annularly-spaced bolts (not shown). A pair of axially-spaced annular flanges 24, 26 of the bearing case 14 extend around a journal bearing 28 of the bearing assembly 10 to position the bearing adjacent the shaft 12. The bearing 28 is affixed to the flanges 24, 26 in any conventional manner including via annularly-spaced bolts (not shown). A small annular clearance 29 is defined at the interface between the bearing 28 and the shaft 12.

The bearing 28 is designed for ring-oiled and/or pressure lubrication, and as such, includes a circumferentially formed slot 30 for accommodating an oil ring 32. The width of the slot 30 is slightly greater than the width of the oil ring 32 such that the oil ring is maintained in substantially the same axial position relative to the bearing case 14. A radially-extending pressure lube feed port 34 is formed through the bearing 28 and is axially spaced from the slot 30. The axially-spaced flanges 24, 26 of the bearing case 14 define a circumferential slot 36 (Fig. 1) in the upper portion of the bearing case to permit radial displacement of the oil ring 32 in an upper direction, as viewed in the drawings. However, gravity will tend to limit any radial displacement of the oil ring 32 in an upper direction, as viewed in the drawing.

A portion of the oil ring 32 extends through the slot 30 in contact with the shaft 12. The oil ring 32 has a diameter that is greater than that of the shaft and is eccentrically positioned relative to the shaft so that a portion of the ring extends into a sump 38 defined in the case 14. The oil ring 32 is in a light frictional engagement with the shaft 12 so that rotation of the shaft 12 causes rotation of the oil ring 32 about its axis at a speed that is lower than that of the shaft. As a result, rotation of the shaft causes the oil ring 32 to rotate through, and draw lubricant from the sump 38 so that a film of oil accumulates on the oil ring. The lubricant drawn from the sump 38 by the oil ring 32 is delivered to the clearance 29 and is distributed in a manner to be described.

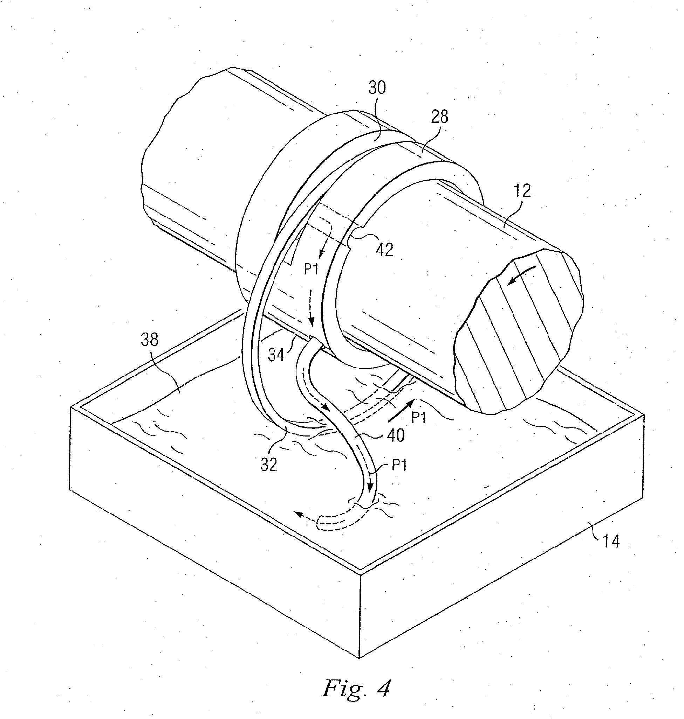

As better shown in Fig. 4, a conduit 40 is connected to the pressure lube feed port 34 in any conventional manner and extends to the sump 38. Although not shown in the drawings, it is understood that the conduit 40 extends through an opening in the case 14. A lubricant feed slot 42 is formed in the bearing 28 and generally extends in an axial direction from the oil ring slot 30 and is angularly displaced form the pressure lube feed port 34.

The above arrangement defines a closed-loop circulation path P1 extending from the sump 38, to the oil ring 32, through the axial feed slot 42, through the clearance 29, through the radial pressure lube port 34, through the conduit 40, and back to the sump.

In operation, rotation of the shaft 12 causes rotation of the oil ring 32, which dips into the sump 38 to draw lubricant from the sump causing a thin lubricant film to form on the inner circumferential surface of the oil ring 32. This lubricant is delivered from the oil ring 32, via the slot 30, to the lubricant feed slot 42 where the lubricant collects. Continual collection of lubricant in the lubricant feed slot 42 causes lubricant to overflow the slot, and pass from the slot, through that portion of the clearance 29 extending between the slot and the port 34, and to the port. This latter flow is promoted by the pressure generated by rotation of the shaft 12 that causes a differential in the relatively high pressure in the clearance 29 and the relatively low atmospheric pressure in the conduit 40. The lubricant thus enters the conduit 40 and flows down the conduit to the lower portion of the sump 38, thereby completing the circulation of this portion of the lubricant through the path P1.

It is understood that while a portion of the lubricant follows the circulation path P1 as described above, another portion of the lubricant drawn from the sump 38 generally lubricates the interface between the bearing 28 and the shaft 12, while yet another portion of the lubricant drawn from the sump 38 spills over the oil ring slot 30 and returns to the lubricant sump without having followed the circulation path P1 or provided general lubricating functions.

Thus, by utilizing the pressure generated between the shaft 12 and the bearing 28, the above-described system effectively circulates lubricant through the bearing assembly 10 without having to employ costly and bulky pumps. Furthermore, the lubricant in the sump 38 is mixed with lubricant that is circulated through the bearing 28. Thus, problems such as stagnation of lubricant in lower portions of the sump 38 are effectively avoided and a majority of the lubricant in the lubricant sump is circulated rather than only a top layer of lubricant.

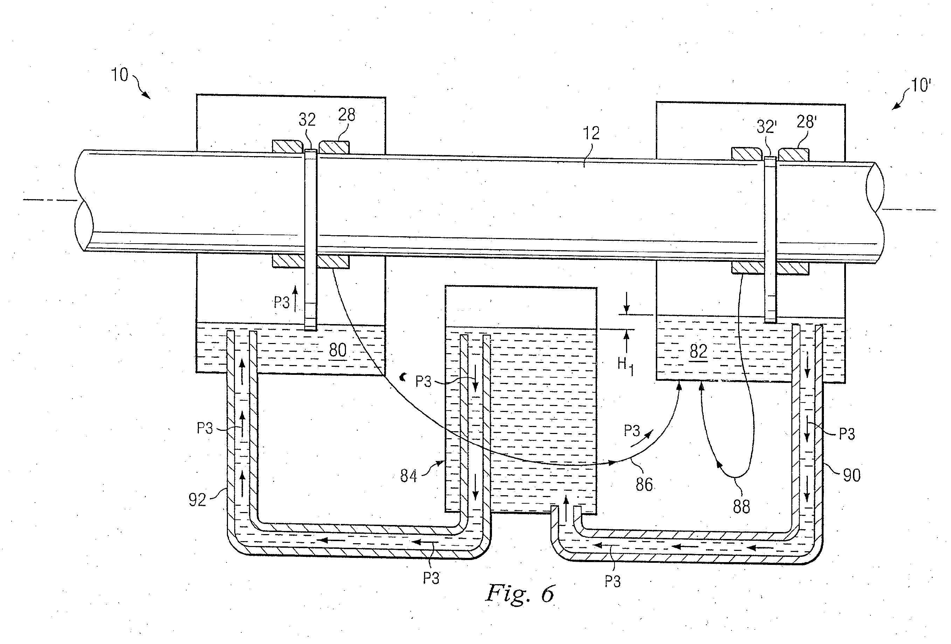

The embodiment of Fig. 5 includes the bearing 28 surrounding the shaft 12 and defining the clearance 29, and the oil ring 32 positioned on the shaft. The bearing case 14, the bearing support 16, and the annular labyrinth seals 18 and 20 have been omitted in the interest of clarity, and the sump 38 has been replaced with a sump 50 which is also formed in the case 14 and which also receives the rotating oil ring 32.

In this embodiment, an external cooler 52 is provided for cooling the lubricant, and a conduit 62 is provided for circulating lubricant from the clearance 29 to the cooler 52. In the latter context it is understood that, although not shown in Fig. 5, a slot and a port identical to the slot 42 and port 34, respectively of the embodiment of Figs. 1-4 are provided in the bearing 28 to transfer lubricant from the clearance 29 to the conduit 62.

The cooler 52 is of conventional design, and, as such, includes an outer annular chamber 64 that contains cooling water and an inner reservoir portion 66 for receiving the lubricant. A conduit 68 connects the cooler 52 to the lower portion of the sump 50.

Thus, a closed-loop lubricant circulation path P2 is defined that extends from the sump 50 to the oil ring 32, from the oil ring through the clearance 29, through the conduit 62, through the cooler 52, through the conduit 68, and back to the sump 50.

In operation, lubricant is circulated from the sump 50 to the clearance 29, via the oil ring 32, in the same manner as described with reference to the embodiment of Figs. 1-4. The rotation of the shaft 12 generates enough pressure to drive the lubricant from the clearance 29 to the conduit 62. The lubricant flows from the conduit 62 to the cooler 52, where the lubricant collects and is cooled by the water in the chamber 64 prior to reentering the sump 50. When the lubricant in the cooler 52 reaches a level that is greater than the level in the sump 50, the lubricant in the cooler circulates to the sump via the conduit 68, thereby completing circulation of the lubricant through the closed-loop lubricant circulation path P2. Thus, circulation of lubricant through the external cooler 52 is accomplished without having to employ a costly external pump. Moreover, by cooling the lubricant during circulation, the useful life of the lubricant is increased, which, in turn, adds to the useful life of the bearing assembly 10.

The embodiment of Fig. 6 includes the bearing assembly 10, including the bearing 28 surrounding the shaft 12 and defining the clearance 29, and the oil ring 32 positioned on the shaft. The bearing case 14, the bearing support 16, and the annular labyrinth seals 18 and 20 have been omitted in the interest of clarity, and the sump 38 has been replaced with a sump 80 which is also formed in the case 14 and which also receives the rotating oil ring 32.

A bearing assembly 10', identical to the bearing assembly 10, is axially displaced from the bearing assembly 10. The bearing assembly 10' includes a bearing 28' surrounding the shaft 12 and defining a clearance (not depicted) and an oil ring 32' positioned on the shaft. The remaining portions of the bearing assembly 10' have been omitted in the interest of clarity and a sump 82 is defined in the case corresponding to the bearing assembly 10'.

In this embodiment, a single reservoir 84 is provided, and a conduit 86, depicted schematically in the interest of clarity, is provided for circulating lubricant from the clearance 29 to the sump 82. A conduit 88, also depicted schematically, is provided for circulating lubricant from the clearance associated with bearing assembly 10' to the sump 82. It is understood that, although not shown in Fig. 6, a slot and a port identical to the slot 42 and port 34, respectively of the embodiment of Figs. 1-4 are provided in the bearings 28 and 28' to transfer lubricant from the clearance 29 and the clearance associated with bearing assembly 10' to the conduits 86 and 88, respectively.

A conduit 90 connects the sump 82 and the reservoir 84, with the end of the conduit 90 that extends into the sump 82 terminating at a sufficient height to act as a standpipe, thereby maintaining the lubricant level in the sump 82 at a greater height (represented by H1) than the lubricant levels in the reservoir 84 and the sump 80.

A conduit 92 connects the sump 80 and the reservoir 84, with the end of the conduit 92 that extends into the reservoir 84 terminating at a sufficient height to act as a standpipe so that lubricant in the reservoir rising above the end of the conduit 92 will enter the conduit and circulate to the sump 80. The end of the conduit 92 that terminates in the sump 80 has a substantially equivalent height as the end of the same conduit that terminates in the reservoir 84, thereby maintaining substantially equivalent lubricant levels in the reservoir and the sump 80 for reasons to be described. Thus, the above-described arrangement defines a closed-loop lubricant circulation path P3 generally extending from the sump 80, to the oil ring 32, through the clearance 29, through the conduit 86, through the sump 82, through the conduit 90, through the reservoir 84, through the conduit 92, and back to the sump 80.

In operation, lubricant is circulated from the sump 80 to the clearance 29 between the shaft 12 and the bearing 28 in the same manner as described with reference to the embodiment of Figs. 1-4. The rotation of the shaft 12. generates enough pressure to drive a portion of the lubricant from the clearance 29 to the conduit 86. The lubricant in the conduit 86 flows to the lower portion of sump 82 where the lubricant mixes with lubricant already in sump 82.

Lubricant circulates from the sump 82 to the clearance associated with bearing assembly 10', via the oil ring 32', in the same manner as described with reference to Figs. 1-4. The rotation of the shaft 12 generates enough pressure to drive a portion of the lubricant from the clearance to the conduit 88 so that the lubricant flows through the conduit 88 to the sump 82. Thus, the sump 82 collects lubricant from both bearing assemblies 10 and 10', which causes the lubricant level of sump 82 to rise.

When the lubricant level in the sump 82 rises above the end of the conduit 90 that terminates in the sump 82, lubricant enters the conduit 90 and circulates to the reservoir 84, causing the lubricant level of the reservoir 84 to rise. When the lubricant level in the reservoir 84 rises above the end of the conduit 92 that terminates in the reservoir, the lubricant enters the conduit 92 and circulates to the sump 80 of the bearing assembly 10. As the ends of the conduit 92 terminate at substantially the same height, gravity causes the lubricant levels in the reservoir 84 and the sump 80 to seek the same level. Thus, the lubricant circulates from the reservoir 84 to the sump 80, thereby completing circulation of the lubricant through the closed-loop lubricant circulation path P3.

By utilizing the single external reservoir 84 to accommodate a lubricant circulation system between the two bearing assemblies 10, 10', the cost and size restraints normally associated with using one reservoir per bearing assembly are effectively eliminated. Furthermore, the extent of the circulation of the lubricant through the above-described arrangement ensures proper circulation of the lubricant without the use of a pump, thereby increasing the useful life of the lubricant, which in turn, reduces the wear and tear on the bearing assemblies 10, 10'.

It is understood that several variations may be made in the foregoing without departing from the scope of the invention. For example, although described with reference to a turbine shaft, the lubricant circulation system according to the present invention may be applied to any arrangement involving a rotating member and a stationary member. Moreover, the cooler 52 of the embodiment of Fig. 5 may alternatively be a reservoir and thus devoid of any cooling elements, and in a similar manner, the reservoir 84 (Fig. 6) may alternatively include cooling elements to provide for cooling of the lubricant being circulated therethrough. Still further, the cooler 52 and the reservoir 84 may include filters for cleaning the lubricant passing therethrough.

Moreover, while it has been described that pressurization of the lubricant promotes flow of the lubricant in the above-described circulation systems, it will be understood that gravity may also assist in the flow of lubricant depending on the physical location of the various components defining the flow paths.

Furthermore, references to specific structure of various elements of the bearing assemblies and the external cooler and reservoir are meant for example purposes only. For example, various types of seals may be substituted for the labyrinth seals 18, 20 and the cooler 52 may alternatively employ cooling coils for cooling the lubricant passing therethrough. Still further, the bearing assemblies 10, 10' may be any type of ring-oiled bearing assemblies.

Moreover, the conduits in the above-described lubricant circulation systems are not limited to a specific arrangement, and they may be attached to the various bearing assemblies in any conventional manner. Furthermore, in some embodiments, the conduits may be removed. Still further, the lubricant feed slot 42 may lead directly to the pressure lube feed port 34 (Fig. 4), and thus the port would not be radially displaced from the lubricant feed slot. If opposite rotation of the shaft 12 is desired, the lubricant feed slot 42 may be formed in an opposite portion of the bearing to collect lubricant drawn from the lubricant sump 38. Also, in some embodiments, the lubricant feed slot 42 may be omitted. Still further; the above spatial references, such as "radial," "axial," "upper," and "lower" are for the purpose of illustration only and do not limit the specific orientation or location of the structure described above.

Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention as defined in the following claims. In the claims, means-plus-function clauses are intended to cover the structures described herein as performing the recited function and not only structural equivalents, but also equivalent structures.

## Claims

1. A lubricant circulation system for a shaft that rotates in a bearing, the system comprising an oil ring for drawing lubricant from a lubricant source and delivering the lubricant to a clearance defined between the shaft and the bearing, and a conduit connected to the clearance for receiving lubricant from the clearance and delivering the lubricant back to the lubricant source.

2. The lubricant circulation system of claim 1 further comprising an axially-extending slot formed in the bearing for collecting a portion of the lubricant drawn from the lubricant source.

3. The lubricant circulation system of claim 2 further comprising a radially-extending port formed through the bearing and connecting the clearance and the conduit.

4. The lubricant circulation system of claim 1 further comprising a radially-extending port formed through the bearing and connecting the clearance and the conduit.

5. The lubricant circulation system of claim 3 wherein the lubricant in the clearance is transferred to the conduit by the pressure differential between the clearance and the conduit.

6. The lubricant circulation system of claim 1 wherein the conduit delivers the lubricant from the clearance to a lower portion of the lubricant source.

7. The lubricant circulation system of claim 1 wherein a portion of the lubricant drawn from the lubricant source follows a closed-loop circulation path.

8. The lubricant circulation system of claim 7 wherein the closed-loop circulation path is defined from the lubricant source, to the oil ring, through the clearance, through the conduit, and back to the lubricant source.

9. The lubricant circulation system of claim 3 wherein a portion of the lubricant drawn from the lubricant source follows a closed-loop circulation path defined from the lubricant source, to the oil ring, through the slot, through the clearance, through the port, through the conduit, and back to the lubricant source.

10. The lubricant circulation system of claim 1 wherein the lubricant source is an oil sump.

11. A lubricant circulation system for a rotating member and a stationary member, the system comprising means for drawing lubricant from a lubricant source and delivering the lubricant to a clearance defined between the rotating member and the stationary member, and means for utilizing the pressure generated between the rotating member and the stationary member to circulate a portion of the lubricant drawn from the lubricant source through the clearance and back to the lubricant source.

12. The lubricant circulation system of claim 11 wherein a portion of the lubricant drawn from the lubricant source follows a closed-loop circulation path defined from the lubricant source, through the clearance, and back to the lubricant source.

13. A lubricant circulation system for a shaft that rotates in a bearing, the system comprising an oil ring for drawing lubricant from a lubricant source and delivering the lubricant to a clearance defined between the shaft and the bearing, a first conduit connected to the clearance for receiving lubricant from the clearance and delivering the lubricant to an external reservoir, and a second conduit linking the external reservoir to the lubricant source for delivering lubricant from the external reservoir to the lubricant source.

14. The lubricant circulation system of claim 13 wherein the external reservoir is a cooler.

15. The lubricant circulation system of claim 13 wherein a portion of the lubricant drawn from the lubricant source follows a closed-loop circulation path defined from the lubricant source, to the oil ring, through the clearance in the bearing, through the first conduit, through the external reservoir, through the second conduit, and back to the lubricant source.

16. The lubricant circulation system of claim 13 further comprising a radially-extending port formed through the bearing and connecting the clearance and the conduit.

17. The lubricant circulation system of claim 16 wherein the lubricant in the clearance is transferred through the port by the pressure generated by rotation of the shaft in the bearing.

18. A lubricant circulation system for a rotary machine, the system comprising:
a first source of lubricant,
a first bearing,
means for utilizing pressure generated within the first bearing for circulating lubricant drawn from the first lubricant source through the first bearing;
a second source of lubricant;
a second bearing;
means for utilizing pressure generated within the second bearing for circulating lubricant drawn from the second lubricant source through the second bearing;
a conduit connecting the first bearing to the second lubricant source;
a conduit connecting the second bearing to the second lubricant source;
a reservoir; and
at least one conduit connecting the reservoir to at least one of the lubricant sources.

19. The system of claim 18 wherein the at least one conduit connects the second lubricant source to the reservoir.

20. The system of claim 19 wherein lubricant in the second lubricant source is circulated through the at least one conduit to the reservoir.

21. The system of claim 18 wherein the at least one conduit connects the reservoir to the first lubricant source.

22. The system of claim 21 wherein lubricant in the reservoir is circulated through the at least one conduit to the first lubricant source.

23. The system of claim 18 wherein a conduit connects the second lubricant source to the reservoir, and another conduit connects the reservoir to the first lubricant source.

24. The system of claim 18 wherein lubricant in the second lubricant source is circulated through a conduit to the reservoir; and wherein lubricant in the reservoir is circulated through another conduit to the first lubrication source.

25. The system of claim 18 wherein lubricant circulates in a closed-loop circulation path including the lubricant sources, the bearings, the conduits, and the reservoir.

26. The system of claim 18 wherein the bearings surround a shaft and are disposed in an axially spaced relation along the shaft.

27. The system of claim 26 further comprising an oil ring extending around the shaft and in a slot in the first bearing and extending in the first lubrication source so that rotation of the shaft and the oil ring draws lubricant from the first lubricant source to the first bearing.

28. The system of claim 26 further comprising an oil ring extending around the shaft and in a slot in the second bearing and extending in the second lubrication source so that rotation of the shaft and the oil ring draws lubricant from the second lubricant source to the second bearing.

29. A lubricant circulation method for a rotary machine, the method comprising:
circulating lubricant drawn from a lubricant source through a bearing to a conduit utilizing pressure generated within the bearing; and
circulating lubricant through the conduit and back to the lubricant source to complete circulation of the lubricant through a closed-loop circulation path.

30. The method of claim 29 wherein the bearing surrounds a shaft.

31. The method of claim 30 further comprising providing an oil ring extending around the shaft and in a slot in the bearing and extending in the first lubrication source so that rotation of the shaft and the oil ring draws lubricant from the lubricant source to the bearing.

32. The method of claim 29 wherein lubricant circulated from the lubricant source collects in a lubricant feed slot formed in the bearing before circulating to the conduit.

33. A lubricant circulation method for a rotary machine, the method comprising:
circulating lubricant drawn from a first lubricant source through a first bearing to a conduit utilizing pressure generated within the first bearing;
circulating lubricant drawn from a second lubricant source through a second bearing to a conduit utilizing pressure generated within the second bearing;
passing lubricant from the first bearing to the second lubricant source;
passing lubricant from the second bearing to the second lubricant source; and
passing lubricant between a reservoir and at least one of the lubricant sources.

34. The method of claim 33 wherein lubricant is passed from the second lubricant source to the reservoir.

35. The method of claim 34 wherein the passage of lubricant from the second lubricant source to the reservoir is assisted by gravity.

36. The method of claim 33 wherein lubricant is passed from the reservoir to the first lubricant source.

37. The method of claim 36 wherein the passage of lubricant from the reservoir to the first lubricant source is assisted by gravity.

38. The method of claim 33 wherein lubricant is passed from the second lubricant source to the reservoir, and from the reservoir to the first lubricant source.

39. The method of claim 38 wherein the passage of lubricant from the second lubricant source to the reservoir, and from the reservoir to the first lubricant source is assisted by gravity.

40. The method of claim 33 further comprising establishing a closed-loop circulation path for the lubricant, the path including the lubricant sources, the bearings, and the reservoir.

41. The method of claim 33 wherein the bearings surround a shaft and are disposed in an axially spaced relation along the shaft.

42. The system of claim 41 further comprising providing an oil ring extending around the shaft and in a slot in the first bearing and extending in the first lubricant source so that rotation of the shaft and the oil ring draws lubricant from the first lubricant source to the first bearing.

43. The system of claim 41 further comprising providing an oil ring extending around the shaft and in a slot in the second bearing and extending in the second lubricant source so that rotation of the shaft and the oil ring draws lubricant from the second lubricant source to the second bearing.
